# EUROPEAN PATENT SPECIFICATION

(11) **EP 3 373 742 B1**
(45) Date of publication and mention of the grant of the patent: **16.02.2022**
(21) Application number: 16793931.3
(22) Date of filing: 10.11.2016
(51) Int. Cl.: A23K 20/147, A23K 20/163, A23K 50/48

(54) **PET FOOD**
HAUSTIERFUTTER
ALIMENT POUR ANIMAUX DE COMPAGNIE

(30) Priority: 10.11.2015 GB 201519854
(43) Date of publication of application: 19.09.2018
(73) Proprietor: Mars, Incorporated, McLean, VA 22101 (US)
(72) Inventor: LAMMERS, Bastian, 27283 Verden (DE); ALEXA, Raluca-Ioana, 6865 AW Doorwerth (NL); PALEARI, Sofia, 20845 Sovico (MB) (IT); ZHENG, Xiaoxue, 27283 Verden (DE)
(74) Representative: Carpmaels & Ransford LLP
(86) International application number: PCT/EP2016/077364
(87) International publication number: WO 2017/081214

(56) References cited:
- EP-A1- 0 326 294
- WO-A2-02/051443
- WO-A2-2006/032005
- JP-A- 2010 246 468
- US-B2- 7 201 932
- DATABASE WPI Week 201529 1 February 2015 (2015-02-01) Thomson Scientific, London, GB; AN 2015-189906 XP002765038, & CN 104 305 316 A (UNIV FUJIAN AGRIC & FORESTRY) 28 January 2015 (2015-01-28) cited in the application
- DATABASE WPI Week 201363 2013 Thomson Scientific, London, GB; AN 2013-N80423 XP002765039, & CN 103 005 541 A (UNIV HEFEI TECHNOLOGY) 3 April 2013 (2013-04-03)
- DATABASE WPI Week 201316 2013 Thomson Scientific, London, GB; AN 2013-B61056 XP002765040, & CN 102 754 858 A (SHANDONG HUIFA FOOD CO LTD) 31 October 2012 (2012-10-31)
- E.J.F. SPICER ET AL: "A toxicological assessment of curdlan", FOOD AND CHEMICAL TOXICOLOGY., vol. 37, no. 4, 1 April 1999 (1999-04-01), pages 455-479, XP055327056, GB ISSN: 0278-6915, DOI: 10.1016/S0278-6915(99)00013-7
- S.Y. Hsu ET AL: "Interactions of konjac, agar, curdlan gum, -carrageenan and reheating treatment in emulsified meatballs", Journal of Food Engineering, vol. 44, no. 4, 1 June 2000 (2000-06-01), pages 199-204, XP055188016, ISSN: 0260-8774, DOI: 10.1016/S0260-8774(00)00026-1
- S.Y. Hsu ET AL: "Comparisons of 13 edible gum-hydrate fat substitutes for low fat Kung-wan (an emulsified meatball)", JOURNAL OF FOOD ENGINEERING, vol. 40, no. 4, 1 June 1999 (1999-06-01), pages 279-285, XP55619617, GB ISSN: 0260-8774, DOI: 10.1016/S0260-8774(99)00064-3
- CHEN C ET AL: "Effects of high pressure level and holding time on properties of duck muscle gels containing 1% curdlan", INNOVATIVE FOOD SCIENCE AND EMERGING TECHNOLOGIES, ELSEVIER, AMSTERDAM, NL, vol. 11, no. 4, 1 October 2010 (2010-10-01), pages 538-542, XP027450725, ISSN: 1466-8564, DOI: 10.1016/J.IFSET.2010.05.004 [retrieved on 2010-05-13]
- Takahiro Funami ET AL: "Curdlan Properties for Application in Fat Mimetics for Meat Products", Journal of Food Science, vol. 63, no. 2, 1 March 1998 (1998-03-01), pages 283-287, XP55619621, US ISSN: 0022-1147, DOI: 10.1111/j.1365-2621.1998.tb15727.x
- Takahiro Funami ET AL: "Thermal and rheological properties of curdlan gel in minced pork gel", Food Hydrocolloids, vol. 12, no. 1, 1 January 1998 (1998-01-01), pages 55-64, XP55619618, NL ISSN: 0268-005X, DOI: 10.1016/S0268-005X(98)00045-9

## Description

The present invention relates to a wet pet food product comprising a moisture content of 40 to 90% and being in the form of a solids in gravy or solids in jelly product, wherein the solids comprise a solid pet food component, said solid pet food component having a moisture content of at least 40% and comprising curdlan, a hydrocolloid (selected from carrageenan, cassia, xanthan, pectin, alginate, agar gum, cellulose, methylcellulose, guar gum, gellan gum, galactomannans, konjac gum, carob gum, starch, modified starch, waxy starch, Arabic gum, karaya gum, tara gum, gum ghatti, gelatin, or any other hydrocolloid from a microbial, plant or animal source), and protein in particulate form; wherein the protein content of the solid pet food component is from 5 to 30% on a wet weight basis. The present invention also relates to a method of making the solid pet food component, the method comprising mixing curdlan, protein and optionally other ingredient(s), heating the mixture to at least 80°C,allowing the heated mixture to cool and optionally shaping and cutting the resultant material. The present invention also relates to a method of making the wet pet food, comprising adding the solid pet food component or components with the remaining food ingredients of the wet pet food and subjecting the mixture to sterilisation.

Pet food products contain proteins from different sources. A large part of current protein sources are from animal products with high functionality. Highly functional proteins have certain water binding and fat binding properties that result in desirable texture formation and preservation of the end products.

Hsu et al., 1999 & 2000; US 7201932; Chen at al.; EP 0326294; and Funami et al., J. Food Sci. & Food Hydrocolloids all teach the use of curdlan with high functional protein from animal sources to give a food product with a desired texture. WO 2006/032005 teaches the use of gellan gum, a different hydrocolloid, in the production of pet food from high functional protein sources. JP 2010246486, CN 104305316, CN 103005541, CN 102754858, WO 02/051443, and Spicer et al. all teach the use of hydrocolloids as ingredients in food.

In the future, such protein sources may be less available as raw materials for the pet food industry as their use in human food production increases.

However, lower functional proteins do not possess the ability to form solid texture (water binding and fat binding properties to make pet food products having the desired texture formation), especially using current recipes and current processing routes. The desired aesthetic is an essential requirement to pet owners as they feed their animals. Texture is also a highly important characteristic of pet foods, to the pet animals themselves, for the purposes of enjoyment of eating.

The purpose of this invention is to address these problems. Accordingly, a first aspect of the present invention provides a wet pet food product comprising a moisture content of 40 to 90% and being in the form of a solids in gravy or solids in jelly product, wherein the solids comprise a solid pet food component which comprises a mixture of curdlan, a hydrocolloid selected from carrageenan, cassia, xanthan, pectin, alginate, agar gum, cellulose, methylcellulose, guar gum, gellan gum, galactomannans, konjac gum, carob gum, starch, modified starch, waxy starch, Arabic gum, karaya gum, tara gum, gum ghatti, gelatin, or any other hydrocolloid from a microbial, plant or animal source; and protein and said solid pet food component having a moisture content of at least 40%, wherein the protein is in particulate form and the protein content of the solid pet food component is from 5 to 30% on a wet weight basis.

The solid pet food component is in the form of an aggregate, for example a chunk. The protein is (or at least a majority of the protein in that at least 50% by weight of the protein) in the form of a particulate (including a powder or meal) which in the presence of a lubricant, such as water, forms a slurry or paste and is dispersed, suspended or in an emulsion form throughout the solid pet food component, preferably in a substantially homogenous mixture. The protein may be in dry or wet form.

The protein may be a low functional protein. Such a low functional protein either cannot or does not possess the ability to form solid texture (the water binding and fat binding properties to form the desired texture or organoleptic properties). In comparison, proteins having textural functional properties or water-binding proteinaceous material can more easily be used to form the required texture/organoleptic properties in the absence of curdlan. A problem to be addressed is the use of proteins with less functionality, to form a useful aggregate composition. It has been found that such low functional proteins (preferably in particulate form), mixed with curdlan and being in a composition with at least 40% moisture form a solid pet food component, according to the first aspect of the invention, and have the desired texture/organoleptic properties. Low functional proteins may be low functional as they occur in nature or may become low functional during changes in conditions such as pH, pressure and/or temperature as obtained from a rendering process. These changes produce proteins which are denatured. Such denaturation is where the shape of the protein is altered so that it is no longer functional.

Curdlan is a hydrocolloid. It provides structure to meat analogue chunks (solid pet food components) in which low functional proteins are used. Without the use of curdlan it would not be possible to obtain the chunk texture and the chunks would not self support themselves. A main advantage of using curdlan is avoiding the use of high functional or functional proteins, which mainly derive from animal material, which are forecasted to be less available for pet food in the future. In contrast, by-products from animals, which have low or no functionality, can be used according to the present invention.

Curdlan sets up an irreversible solid form only upon heating (>80°C) which is a unique property compared to other hydrocolloids which set up a reversible (temperature-dependant) structure or need ion addition to create a solid aggregate. Due to this property, a standard process for chunk production can be used to process the first aspect of the present invention, without the need to set up a new process.

Curdlan also provides a structure that does not change upon further heating and/or retorting. Curdlan is tasteless, odourless and colourless. Together with the other ingredients according to the first and second aspects of the invention it retains palatability.

Curdlan is not soluble in water and needs to be dispersed in water to create a suitable texture. Dispersion of powdered curdlan has previously been achieved by the use of an alkaline solution (curdlan becomes soluble at pH>11) and/or the use of a thickener. Surprisingly, no such alkaline solution is required to produce the solid pet food component of the first aspect of the invention. In fact, the pet food of the first aspect preferably has a pH of <11, preferably <8.

Curdlan is a high molecular weight polymer of glucose, beta-(1→3)-glucan. Curdlan can be produced in high yield by fermentation culture of strains of *Alcaligenes faecalis* var. *myxogenes,* or *Agrobacterium radiobacter* NCIM2443. Its production is well documented in the art. The fact that curdlan is produced in high quantities, at high purity by a laboratory process enables sufficient quantities to be produced without relying on natural sources of hydrocolloids.

The solid pet food component of the first aspect of the invention has a moisture content of at least 40% and may have a moisture content of at least 45%, 50%, 55%, 60%, 65%, 70%, 75%, 80%, 85%, or 90%.

The curdlan is preferably present in the product in the range of 0.5% to 25% (on a wet weight basis). The curdlan is preferably present in a percentage lower than 10%, 9%, 8%, 7%, 6%, 5%, 4%, 3%, 2% or 1% and may be present in the ranges 0.05% to 25%, more preferably 0.25 to 10%, or 0.5 to 5% or 2 to 4%, or around 3% (on a wet weight basis). The precise amount of curdlan may be determined in combination with the amount of moisture and type of protein being used. The skilled person can easily determine the amount of each component needed by tests as described herein.

The protein in the solid pet food component of the first aspect of the invention is in the range of from 5 to 30%, optionally from 15 to 20% (on a wet weight basis).

The protein may be derived from one or more of the following sources: poultry, pork, beef, lamb, fowl and any other animal, game, fish, crustacean, shell fish, larvae, worm, insect, yeast, plant, algae, microalgae, seaweed, fungi, microorganisms or maize gluten powder, each in the form of a particulate, such as meal or powder or slurry or paste (together with a lubricant, such as water) and/or the whole native material.

The protein may be a low functional protein.

A low functional protein is a protein with hardness of no more than 150 ± 20 [(g/g of chunk)*20% protein] when measured in the form of chunk via a Texture Analyzer. The chunk is obtained by dispersing or dissolving the protein to provide a dispersion or solution (typically from a dry protein) or emulsion (typically from a wet protein) of about 20% protein content and a minimum moisture level of 40 % and placing the solution into a silicon mold and heating for 8-10 minutes at 80-100 °C. Optionally the chunk obtained is one that will not be intact if it is subsequently retorted while heating to 120 °C for at least 30 minutes.

The hardness is measured using a Texture Analyzer TA.XT Plus (Stable Microsystems). Suitably a high speed mixer is used (1000 rpm) to disperse or dissolve the protein in a solution or emulsion.

A steam oven is a suitable means for heating. Silicon muffin molds may be used e.g. molds having a diameter 3 cm; lower diameter 2,5 cm; height 2,5 cm to obtain chunks.

One suitable method for measuring the hardness is to prepare a solution or emulsion containing about 20% protein from the raw material. The dispersion, solution or emulsion should comprise at least 40% moisture. The solution or emulsion can be prepared using a high speed kitchen mixer, at roughly 1000 rpm. The solution or emulsion is then placed in the silicon mold and heated for 8-10 minutes at 80-100°C in the steam oven. The solution or emulsion is then cooled for at least 10 minutes; if necessary, with the use of ice cubes. The obtained chunks is then retorted in a 100 g pouch, filled with water up to 100 g total weight. The sterilization program is set at a temperature higher than 110°C for at least 30 minutes. The texture of the non-retorted chunk is measured via TA Texture Analyzer, single compression, 50% deformation.

The solid pet food component may comprise only the protein, a hydrocolloid according to claim 1, curdlan, and water or it may comprise other ingredients, such as additional protein, other hydrocolloids, flavours, colourants, vitamins, minerals, carbohydrate and/or fat.

A second hydrocolloid is present in the solid pet food component. Such a second hydrocolloid is selected from carrageenan, cassia, xanthan, pectin, alginate, agar gum, cellulose, methylcellulose, guar gum, gellan gum, galactomannans, konjac gum, carob gum, starch, modified starch, waxy starch, Arabic gum, karaya gum, tara gum, gum ghatti, gelatin, or any other hydrocolloid from a microbial, plant or animal source. Such a second hydrocolloid may be present in an amount of 0.05 to 25% (on a wet weight basis). The preferred total hydrocolloid in the component product is from 0.05 to 30% (on a wet weight basis).

Flavour may be added to give food a particular taste or smell and may be derived from natural ingredients or artificially created. Flavours include one or more products of the Maillard reaction.

The solid pet food component as defined in the first aspect of the invention is a material which is effective as a component for wet pet food products, such as chunks in gravy and/or chunks in jelly products.

The wet pet food product according to the first aspect of the invention is a product which an animal, such as a dog or a cat, may consume in its diet. The term animal in this text includes any animal that could benefit from or enjoy the consumption of the wet pet food products of the present invention, including canine and/or feline animals. Most preferably, the animal is a pet dog or pet cat. Thus the invention covers standard food products, supplements, pet food, snacks, care and treats. The food product is preferably a cooked product.

The size of the solid pet food component of the wet pet food product of the first aspect of the invention will vary and depends on the animal that is consuming the pet food. The size can range in length from 5mm to 200mm, preferably 10mm to 100mm, more preferably 20mm to 80mm, and even more preferably 5 mm to 20 mm, in particular when used to form the wet pet food product.

The invention relates to a moist pet product comprising a total moisture content of 40% to 90% and being in the form of solids in gravy or solids in jelly product, wherein a solids comprise or are a solid pet food component.

The moist pet food of the invention may contain between 10 to 50% by weight of the solid pet food component, or 15 to 40% by weight or 20 to 35% by weight of the solid pet food of the invention. The invention, in terms of a moist pet food comprises the solid pet food, as defined in the claims, and other ingredients to form a moist pet food. The other ingredients will be in the form of a gravy or jelly (to form a solids/chunks in gravy or jelly product) and may include meat or other ingredients. Meat loafs are usually prepared by comminuting raw meat material and gelling agents and optionally mixing it with water, salt, spices, curing agents. The mixture is combined with the solid pet food component of the first aspect of the invention. The mixture is then filled into cans to form, after retorting and cooling, a meat loaf.

The gravy or jelly comprises one or more additional ingredients selected from the group consisting of a liquid carrier e.g. water, fats or oils, a thickening agent and flavouring agents. The gravy or jelly is generally a coating material which surrounds the meat like chunk. The gravy or jelly will likely contain a thickening agent which is used to control its consistency.

The flavouring agents such as, beef flavour and meat flavour, can be used in amounts sufficient to impart the desired flavour. It is possible to provide further nutritional ingredients in the moist pet food to achieve a nutritionally balanced pet food. Nutritional ingredients may include one or more of meat and other animal products, raw meaty bones, boneless meat, fish, organs, eggs, dairy products, fruits and vegetables, grains, supplements such as minerals, fish oil, cod liver oil, plant oils, vitamins and iodine. The product is preferably sterilised.

A further aspect of the invention provides a method of making a solid pet food component according to the first aspect of the invention. Such a method involves mixing curdlan, protein and any other ingredient to a mixture of at least 40% water, heating to at least 80°C, optionally for at least 60 seconds and allowing the product to cool, with optional shaping and cutting. The other ingredient should be food grade ingredients. The forming of the solid pet food component is carried out according to processes known in the art. These include processes to form the component by extrusion through nozzles and/or heating. Some form of further hydrocolloid may be added during the process. The ingredients to make the component are mixed and heated/extruded sufficiently (optionally with pressure) to solidify the mixture. Heating temperatures from 90-150°C, preferably 100-120°C for 1 to 10 minutes, preferably about 1 minute. The cooled product is then cut into portions/chunks as desired.

One method used to form the solid pet food component is described in WO 00/69276 and uses higher-moisture extrusion techniques to create a Higher Moisture Extruded Chunk. US 4,247,562 also describes the process of making such solid pet food components. In general the pet food component is produced using a heated extruder to combine ingredients along with water. In the extruder, the mixture is plasticised and heated to form a hot, viscous and at least partly molten mass (i.e. protein lava).The extruder barrels and screw then mixes, heats, coagulates, expands and shears the mixture into a meat-like mass which is then formed into different shapes and cut by standard knives. Another method used to form the solid pet food includes the use of a steam tunnel to cook the combined ingredients. The mixture or meat emulsion is extruded in the form of ropes, which are then cut into the meat-like chunks by standard knives. The steam tunnel is a conveyor system that transports the product through the steam installation. The ropes are long strings of meat emulsion or mixture that are pumped through nozzles of variable size. The products are blanched or cooked with saturated steam which is injected from above and below the conveyor belt which exposes the product to a continual and even application of steam to ensure it is cooked thoroughly.

A particular advantage of the present invention is the use of standard processing and equipment to form the solid pet food component.

The invention also relates to making a wet pet food product, the method comprising adding the solid pet food component with the remaining food ingredients of the wet pet food and subjecting the mixture to sterilisation. The sterilisation is preferably a thermal treatment exceeding 110°C.

Thus the method comprises the steps of combining gravy, jelly, meat or meat batter to the solid pet food component, optionally heating and optionally packaging the product.

After the solid pet food component is made (optionally diced or cubed to an appropriate size) it/they are placed in a can or other package. The solid pet food component may be added to the can while a hot or cold gravy solution or jelly-type material (e.g. 65°C to 95°C), may be poured over the product to produce a ready-to-eat meat like chunk in gravy or in jelly. This method allows the meat like chunk to warm up and untrapped gases to be expelled prior to closing the packaging. The filled packages/cans may be vacuum closed and processed using commercially acceptable sterilisation techniques. Alternatively, ingredients are added to the solid pet food component of the invention and packaged, where the ingredients, in the usual sterilisation process, result in the formation of a jelly or gravy mixed with the solid pet food component in the package.

In various embodiments, the solids to gravy ratio and/or jelly ratio is about 20:80, 30:70, 40:60, 45:55, 50:50, 55:45 and 60:40.

The methods of the invention may include the step of packaging the moist pet food. The packaging may be in a can (tin) or jar (e.g. glass) or otherwise a plastic, metal, foil pouch, or flexifoil, all of which can be sealed.

Also described is the use of a combination of curdlan and a protein in forming a solid pet food component.

In the preparation of pet food products generally, ingredient selection can have a high impact on pet food texture, uniformity, extrudability, nutritional quality and ability to accept high levels of fat and water to provide the aforementioned qualities. The present invention provides products which provide the desired solid texture, organoleptic properties and appearance.

The present invention will now be described with reference to the following non-limiting examples:

### Examples

In the following examples the term "chunk" is used synonymously with solid pet food component according to the first aspect of the invention.

### Example 1

This Example aimed at showing the feasibility to utilize curdlan in chunk production at kitchen scale, formulated with proteins of very low functionality. The objectives are:
- showing that curdlan is able to set up chunks made from low functional meat ingredients
- showing that these chunks are stable to retorting

### Materials:

- Chicken by-product (the chicken material is treated at 90°C for 10 minutes to de-functionalise it and cooled to -18°C).
- Curdlan (CUD)
- Xanthan (XG)

Chicken by-product was choosen as low functional protein source. This by-product is low functional. In the absence of curdlan it can create a form of borderline meat chunks (which do not have a proper structure and do not stand retortion), and which that can be used as a "0 control" recipe in the experiments.

### List of equipment:

- Bowl chopper (8 kg batch)
- Emulsifier (8 kg batch)
- Kitchen mixer (Kroner)
- Kitchen balance
- 9 mm nozzle + plastic bags for pastry
- Steam oven
- 100 g pouches
- Pouch sealer
- Retort

### Methods

### Preparation of the emulsion

Chicken by-product was weighed frozen and ground in the bowl chopper for 5 minutes at low speed and 2 minutes at high speed. After this operation, the material was transferred to the emulsifier and passed through the circulating knives. The gap between the knives is 0.5 mm. This operation permits to have an emulsion which is still below 0°C. The emulsion thus obtained was stored at 4°C waiting to be used in the kitchen to prepare the recipes.

### Preparation of the recipes

Chicken by-product was mixed with the other ingredients at kitchen scale using a kitchen mixer. 1kg batches were prepared for every recipe. First, the chicken by product emulsion was weighed in the bowl, then the powders were added; the Kroner mixer was activated at max speed for 10 seconds and then stopped to scratch the powders from the wall; after this operation, the mixer was activated again for 2 minutes to mix the emulsion+powder properly.

### Preparation of the ropes, cooking and cutting in chunks

The chicken by product emulsion was then piped to be a rope shaped by 9 mm diameter nozzle and cooked in the 100°C steam oven for 2 minutes. The ropes were cooled for 2 minutes and cut into a length of 7 mm to obtain chunks.

### Preparation of the pouches

The chunks were put in 100g transparent pouches, which were then filled with tap water to imitate the gravy part of wet petfood. The proportion between chunks and water was 35:65. The pouches were then sealed with the pouch sealer and sterilized in the retort.

### Measurements

### Measurement on fresh chunks

The hardness of the chunks was measured by TA-TX2i Texture Profile Analyzer with the texture exponent 32 software. The 5 kg load cell (force sensitivity: 0.1 g) was applied for the right amount of force. A chunk was placed on the bottom plate and the upper apparatus presses it to the 50% of its original height with return distance of 15 mm, return speed of 10mm/sec and contact force of 10g. The chunk was weighed as well to normalize the hardness of every chunk by its weight. The peak of the force (at point 2) which occurs during the compression represents the hardness (g) of a chunk. Twenty randomly selected chunks per production batch were measured and the hardness values were averaged.

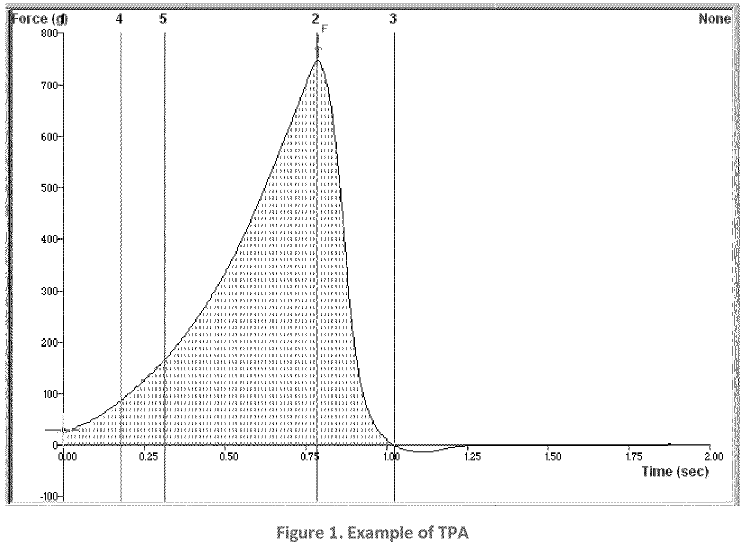

### Results

In the table below, the recipes tested in Example 1 are listed. For each recipe, the inclusion level of curdlan is reported. Additionally, the inclusion level of the second hydrocolloid (xanthan) is reported.

For each recipe, the hardness (g/g) of each chunk as measured via Texture Analyzer is reported, both before and after sterilization.

As written hereinbefore, a low functional protein (like the one present in the chicken by product of this Example) is not able to create chunks with a hardness level higher than 150 ± 20 g/g or cannot withstand sterilization.

In the results given below, every recipe containing curdlan optionally and the second hydrocolloid xanthan presents a hardness way higher than the one mentioned above and can withstand sterilization to retain its shape.

| **Chicken meat by product (g)** | **Curdlan (g)** | **Xanthan (g)** | **Hardness before sterilization (g/g)** | **Hardness after sterilization (g/g)** | **Can it withstand sterilization?** | **Moisture content calculated [%]** |
|---|---|---|---|---|---|---|
| 1000 | 0 | 0 | 150±20 | N/A | No | 72.0 |
| 990 | 10 | 0 | 459±27 | 678±34 | Yes | 71.4 |
| 980 | 20 | 0 | 575±39 | 789±48 | Yes | 70.7 |
| 970 | 30 | 0 | 746±68 | 879±60 | Yes | 70.1 |
| 960 | 40 | 0 | 915±59 | 963±85 | Yes | 69.5 |
| 989.5 | 10 | 0.5 | 430±34 | 675±58 | Yes | 71.3 |
| 979.5 | 20 | 0.5 | 561±31 | 676±58 | Yes | 70.7 |
| 969.5 | 30 | 0.5 | 718±55 | 789±53 | Yes | 70.1 |
| 989 | 10 | 1 | 420±30 | 627±59 | Yes | 71.3 |
| 979 | 20 | 1 | 518±43 | 666±32 | Yes | 70.7 |
| 969 | 30 | 1 | 671±41 | 675±59 | Yes | 70.0 |
| 988.5 | 10 | 1.5 | 386±28 | 583±46 | Yes | 71.3 |
| 978.5 | 20 | 1.5 | 496±46 | 675±59 | Yes | 70.6 |
| 968.5 | 30 | 1.5 | 635±51 | 627±59 | Yes | 70.0 |

The chicken-by-product used was Chicken viscera. This material has a moisture level of 72 %.

All the Curdlan used had a moisture content of 9 %.

The Cassia Gum had a moisture content of 10 %

The Carob Gum had a moisture content of 9,5 %.

The Xanthan gum had a moisture level of 11 %.

The Waxy maize starch had a moisture content of 12%.

In all cases a moisture level of more than 69 % was used, as shown in the table.

### Example 2

### Materials

- Chicken by-product (the chicken material was treated at 90°C for 10 minutes to de-functionalise it and cooled to -18°C.
- Curdlan (CUD)
- Cassia gum
- Waxy maize starch
- Carob gum

### List of equipment

### Same as Example 1

### Methods

### Same as Example 1

### Measurements

### Same as Example 1

### Results

In the table below, the recipes that were tested in Example 2 are listed. For each recipe, the inclusion level of curdlan is reported. Additionally, the inclusion level of a second hydrocolloid (cassia, waxy maize starch, carob) is reported.

For each recipe, the hardness (g/g) of each chunk as measured via Texture Analyzer is reported, both before and after sterilization.

As written hereinbefore, a low functional protein (like the one present in the chicken by product of this Example) is not able to create chunks with a hardness level higher than 150 ± 20 g/g or cannot withstand sterilization.

In the results given below, every recipe containing curdlan optionally and the second hydrocolloid presents a hardness way higher than the one mentioned above and can withstand sterilization to retain its shape.

| **Chicken meat by product (g)** | **Curdlan (g)** | **Second hydrocolloid type** | **Second hydrocolloid weight (g)** | **Hardness before sterilization (g/g)** | **Hardness after sterilization (g/g)** | **Can it withstand sterilization?** | **Moisture content calculated [%]** |
|---|---|---|---|---|---|---|---|
| 1000 | 0 | - | 0 | 150±20 | N/A | No | 72.0 |
| 985 | 10 | Cassia | 5 | 268±20 | 497±43 | Yes | 71.1 |
| 975 | 20 | Cassia | 5 | 376±21 | 641±47 | Yes | 70.4 |
| 965 | 30 | Cassia | 5 | 502±42 | 692±40 | Yes | 69.8 |
| 980 | 10 | Cassia | 10 | 291±26 | 502±46 | Yes | 70.8 |
| 970 | 20 | Cassia | 10 | 357±33 | 585±40 | Yes | 70.1 |
| 960 | 30 | Cassia | 10 | 480±46 | 633±33 | Yes | 69.5 |
| 985 | 10 | Carob | 5 | 253±21 | 535±43 | Yes | 71.1 |
| 975 | 20 | Carob | 5 | 330±26 | 589±26 | Yes | 70.4 |
| 965 | 30 | Carob | 5 | 425±25 | 624±23 | Yes | 69.8 |
| 980 | 10 | Carob | 10 | 276±17 | 493±27 | Yes | 70.7 |
| 970 | 20 | Carob | 10 | 320±23 | 484±27 | Yes | 70.1 |
| 960 | 30 | Carob | 10 | 449±36 | 522±38 | Yes | 69.5 |
| 985 | 10 | Waxy starch | 5 | 320±31 | 509±35 | Yes | 71.1 |
| 975 | 20 | Waxy starch | 5 | 388±36 | 520±33 | Yes | 70.4 |
| 965 | 30 | Waxy starch | 5 | 492±30 | 653±52 | Yes | 69.8 |
| 980 | 10 | Waxy starch | 10 | 293±31 | 412±34 | Yes | 70.8 |
| 970 | 20 | Waxy starch | 10 | 408±32 | 499±31 | Yes | 70.1 |
| 960 | 30 | Waxy starch | 10 | 525±46 | 599±37 | Yes | 69.5 |

The chicken-by-product used was Chicken viscera. This material has a moisture level of 72 %.

All the Curdlan used had a moisture content of 9 %.

The Cassia Gum had a moisture content of 10 %

The Carob Gum had a moisture content of 9,5 %.

The Xanthan gum had a moisture level of 11 %.

The Waxy maize starch had a moisture content of 12%.

In all cases a moisture level of more than 69 % was used, as shown in the table.

### Reference Example 3

### Materials

- Maize gluten
- Water
- Curdlan (CUD)

Maize gluten was chosen as a source of low functional protein source. A paste of 35:65 gluten:water was prepared. In the absence of curdlan, this paste does not have functionality in terms of aggregation and it is not capable of creating a solid chunk under the conditions described below for the combination with curdlan.

### List of equipment

- Bowl chopper (8 kg batch)
- Kitchen mixer (Kroner)
- Kitchen balance
- 9 mm nozzle + plastic bags for pastry
- Steam oven
- 100 g pouches
- Pouch sealer
- Retort

### Methods

### Preparation of the emulsion ("paste")

The weighed amount of maize gluten was added to the bowl chopper together with water and mixed until a homogenous mix was obtained.

### Preparation of the recipes

The above mentioned paste was mixed with other ingredients (i.e. curdlan) using a high shear mixer (Kroner) in batches of 1 kg. First, the paste was weighed in the bowl, then the powders were added; the Kroner mixer was activated at max speed for 10 seconds and then stopped to scratch the powders from the wall; after this operation, the mixer was activated again for 2 minutes to mix the paste and powder properly.

### Preparation of the ropes, cooking and cutting in chunks

The above mentioned mix (paste and powder) was then piped to be a rope shaped by 9 mm diameter nozzle and cooked in the 100°C steam oven for 2 minutes. The ropes were cooled for 2 minutes and cut into a length of 7 mm to obtain chunks.

### Preparation of the pouches

The chunks were put in 100g transparent pouches, which were then filled with tap water to imitate the gravy part of wet petfood. The proportion between chunks and water was 35:65. The pouches were then sealed with the pouch sealer and sterilized in the retort.

### Measurements

### Same as Example 1

### Results

In the table below, the recipes that were tested in Example 3 are listed. For each recipe, the inclusion level of curdlan is reported. For each recipe, the hardness (g/g) of each chunk as measured via Texture Analyzer is reported, both before and after sterilization.

As written hereinbefore, a low functional protein (like maize gluten) is not able to create chunks without the presence of curdlan.

In the results given below, every recipe containing curdlan is able to create solid chunks with a hardness higher than 150±20 g/g and can withstand sterilization to retain its shape.

| **Maize gluten paste (g)** | **Curdlan (g)** | **Hardness before sterilization (g/g)** | **Can it withstand sterilization?** | **Moisture content calculated [%]** |
|---|---|---|---|---|
| 1000 | 0 | None | No | 68.5 |
| 980 | 20 | 457.09 | Yes | 68.5 |
| 970 | 30 | 623.74 | Yes | 68.5 |
| 960 | 40 | 721.02 | Yes | 68.5 |
| 950 | 50 | 927.44 | Yes | 68.5 |
| 940 | 60 | 1017.41 | Yes | 68.5 |
| 930 | 70 | 1162.65 | Yes | 68.5 |
| 920 | 80 | 1387.07 | Yes | 68.5 |

This example shows that adding curdlan to the recipe enables the creation of solid chunks.

The addition of curdlan in this model recipe is correlated linearly with the hardness increase. Indeed, as curdlan concentration increases by 1%, hardness increases on average by approximately 149 g/g.

Maize gluten/corn gluten has a moisture level of 10 %.

A 35 % water mixture and 65 % corn gluten mixture has a moisture level of 41,5 %.

The moisture content of the Curdlan was 9 %.

## Claims

1. A wet pet food product comprising a moisture content of 40 to 90% and being in the form of a solids in gravy or solids in jelly product, wherein the solids comprise a solid pet food component, said solid pet food component having a moisture content of at least 40% and comprising:
a) curdlan;
b) a hydrocolloid selected from carrageenan, cassia, xanthan, pectin, alginate, agar gum, cellulose, methylcellulose, guar gum, gellan gum, galactomannans, konjac gum, carob gum, starch, modified starch, waxy starch, Arabic gum, karaya gum, tara gum, gum ghatti, gelatin, or any other hydrocolloid from a microbial, plant or animal source; and
c) protein in particulate form;
wherein the protein content of the solid pet food component is from 5 to 30% on a wet weight basis.

2. The wet pet food product of claim 1, wherein the protein is derived from one or more of poultry, pork, beef, lamb, fowl, game, fish, crustaceans, shellfish, larvae, worm, insects, yeast, plant, algae, microalgae, seaweed, fungi, microorganisms or maize gluten powder, each in the form of meal, powder, slurry and /or the whole native material, optionally wherein the protein is a low functional protein.

3. The wet pet food product of claim 1 or claim 2, wherein the curdlan is present in the range of from 0.05% to 25% on a wet weight basis.

4. The wet pet food product of claim 1 or claim 2, comprising a solid pet food component, wherein the total hydrocolloid content is from 0.05 to 30% on a wet weight basis.

5. A method of making a solid pet food component, for use in the wet pet food product as claimed in any one of claims 1 to 4, the method comprising mixing curdlan, protein and optionally other ingredient(s), heating the mixture to at least 80°C,allowing the heated mixture to cool and optionally shaping and cutting the resultant material.

6. A method of making a wet pet food product as claimed in any one of claims 1 to 4, comprising adding the solid pet food component or components with the remaining food ingredients of the wet pet food and subjecting the mixture to sterilisation.

## Patentansprüche

1. Feuchtes Haustiernahrungsprodukt, das einen Feuchtegehalt von 40 bis 90 % umfasst und in der Form eines Feststoffe-in-Sauce- oder Feststoffe-in-Gelee-Produkts vorliegt, wobei die Feststoffe eine feste Haustiernahrungskomponente umfassen, wobei die feste Haustiernahrungskomponente einen Feuchtegehalt von wenigstens 40 % aufweist und umfasst:
a) Curdlan;
b) ein Hydrokolloid ausgewählt aus Carrageenan, Kassia, Xanthan, Pektin, Alginat, Agargummi, Cellulose, Methylcellulose, Guargummi, Gellangummi, Galactomannanen, Konjakgummi, Johannisbrotkernmehl, Stärke, modifizierter Stärke, Wachsstärke, Gummi arabicum, Karayagummi, Taragummi, Ghattigummi, Gelatine, oder ein beliebiges anderes Hydrokolloid aus einer mikrobiellen, pflanzlichen oder tierischen Quelle; und
c) Protein in Partikelform;
wobei der Proteingehalt der festen Haustiernahrungskomponente von 5 bis 30 % auf Feuchtgewichtbasis beträgt.

2. Feuchtes Haustiernahrungsprodukt gemäß Anspruch 1, wobei das Protein abgeleitet ist von einem oder mehreren von Geflügelfleisch, Schweinefleisch, Rindfleisch, Lammfleisch, Geflügel, Wildfleisch, Fisch, Krustentieren, Schalentieren, Larven, Würmern, Insekten, Hefe, Pflanzen, Algen, Mikroalgen, Seetang, Pilzen, Mikroorganismen oder Maisglutenpulver, jeweils in der Form von Mehl, Pulver, Aufschlämmung und/oder des nativen Gesamtmaterials, wobei das Protein gegebenenfalls ein niederfunktionelles Protein ist.

3. Feuchtes Haustiernahrungsprodukt gemäß Anspruch 1 oder Anspruch 2, wobei das Curdlan in dem Bereich von 0,05 % bis 25 % auf Feuchtgewichtbasis vorhanden ist.

4. Feuchtes Haustiernahrungsprodukt gemäß Anspruch 1 oder Anspruch 2, umfassend eine feste Haustiernahrungskomponente, wobei der Gesamt-Hydrokolloidgehalt von 0,05 % bis 30 % auf Feuchtgewichtbasis beträgt.

5. Verfahren zur Herstellung einer festen Haustiernahrungskomponente zur Verwendung in dem feuchten Haustiernahrungsprodukt gemäß einem der Ansprüche 1 bis 4, wobei das Verfahren Mischen von Curdlan, Protein und gegebenenfalls anderen Inhaltsstoff(en), Erhitzen des Gemischs auf wenigstens 80 °C, Abkühlenlassen des erhitzten Gemischs und gegebenenfalls Formen und Schneiden des erhaltenen Materials umfasst.

6. Verfahren zur Herstellung eines feuchten Haustiernahrungsprodukts gemäß einem der Ansprüche 1 bis 4, umfassend Zugeben der festen Haustiernahrungskomponente oder -komponenten zu den verbleibenden Nahrungsinhaltsstoffen der feuchten Haustiernahrung und Unterwerfen des Gemischs an Sterilisation.

## Revendications

1. Produit alimentaire humide pour animaux de compagnie comprenant une teneur en humidité de 40 à 90 % et se trouvant sous la forme d'un produit de solides en sauce ou de solides en gelée, les solides comprenant un composant de type aliment pour animaux de compagnie solide, ledit composant de type aliment pour animaux de compagnie solide possédant une teneur en humidité d'au moins 40 % et comprenant :
a) du curdlane ;
b) un hydrocolloïde choisi parmi un carraghénane, une casse, un xanthane, une pectine, un alginate, une gomme agar, une cellulose, une méthylcellulose, une gomme de guar, une gomme gellane, des galactomannanes, une gomme konjac, une gomme de caroube, un amidon, un amidon modifié, un amidon cireux, une gomme arabique, une gomme karaya, une gomme tara, une gomme ghatti, une gélatine, ou un quelconque autre hydrocolloïde provenant d'une source microbienne, végétale ou animale ; et
c) une protéine sous forme particulaire ;
la teneur en protéine du composant de type aliment pour animaux de compagnie solide étant de 5 à 30 % sur une base de poids humide.

2. Produit alimentaire humide pour animaux de compagnie selon la revendication 1, la protéine étant issue d'un ou plusieurs parmi la volaille, le porc, le bœuf, l'agneau, la volaille, le gibier, le poisson, les crustacés, les mollusques, les larves, un ver, les insectes, la levure, les végétaux, les algues, les microalgues, les algues marines, les champignons, les micro-organismes et la poudre de gluten de maïs, chacun sous la forme d'une farine, d'une poudre, d'une suspension et/ou sous la forme de la matière native entière, éventuellement la protéine étant une protéine faiblement fonctionnelle.

3. Produit alimentaire humide pour animaux de compagnie selon la revendication 1 ou la revendication 2, le curdlane étant présent dans la plage allant de 0,05 % à 25 % sur une base de poids humide.

4. Produit alimentaire humide pour animaux de compagnie selon la revendication 1 ou la revendication 2, comprenant un composant de type aliment pour animaux de compagnie solide, la teneur totale en hydrocolloïde étant de 0,05 à 30 % sur une base de poids humide.

5. Procédé de préparation d'un composant de type aliment pour animaux de compagnie solide, pour une utilisation dans le produit alimentaire humide pour animaux de compagnie selon l'une quelconque des revendications 1 à 4, le procédé comprenant le mélange de curdlane, de protéine et éventuellement d'un autre ingrédient ou d'autres ingrédients, le chauffage du mélange à une température d'au moins 80 °C, le fait de laisser refroidir le mélange chauffé et éventuellement la mise en forme et la découpe de la matière résultante.

6. Procédé de préparation d'un produit alimentaire pour animaux de compagnie selon l'une quelconque des revendications 1 à 4, comprenant l'ajout du composant ou des composants de type aliment pour animaux de compagnie solide avec les ingrédients alimentaires restants de l'aliment humide pour animaux de compagnie et la soumission du mélange à une stérilisation.
